# DEMANDE DE BREVET EUROPEEN

(11) **EP 2 737 803 A1**
(43) Date de publication de la demande: **04.06.2014**
(21) Numéro de dépôt: 12290421.2
(22) Date de dépôt: 03.12.2012
(51) Int. Cl.: A23C 1/04, A23C 9/00, A23C 19/086

(54) **Procédé de préparation d'une poudre fromagère, et procédé de préparation d'un produit fromager par reconstitution.**

(71) Demandeur: Entremont Alliance, 74000 Annecy (FR)
(72) Inventeur: Batisse, Marc, 74540 Hery sur Alby (FR)
(74) Mandataire: Delaveau, Sophie

(57) **Abrégé**

L'invention porte principalement sur un procédé de préparation d'une poudre fromagère en vue de la reconstitution d'un produit fromager qui est essentiellement caractérisé en ce qu'il comporte au moins les étapes de :
- réalisation d'un mélange laitier (1) comportant des composants constitués notamment de matière grasse et de matière protéique et dont les teneurs respectivement en matière grasse et matière protéique relativement à la teneur en extrait sec du mélange (1) sont ajustées selon les teneurs correspondantes visées dans le produit fromager après reconstitution,
- emprésurage (2), coagulation et obtention d'un coagulum,
- découpage du coagulum (3) et obtention d'un mélange fromager,
- fonctionnalisation (5) du mélange fromager par au moins une opération d'émulsification et obtention d'un mélange fromager fonctionnalisé,
- séchage (6) du mélange fromager fonctionnalisé et obtention d'une poudre fromagère (7).

L'invention porte en outre sur un procédé de préparation d'un produit fromager qui comprend au moins une étape de reconstitution consistant en au moins une opération de mélange (8) d'un composant liquide avec la poudre fromagère (7).

## Description

L'invention concerne principalement un procédé de préparation d'une poudre fromagère.

L'invention concerne en outre un procédé de préparation d'un produit fromager par reconstitution à partir de ladite poudre fromagère.

Les produits fromagers couvrent différents produits issus du lait. On citera notamment les pâtes pressées, les fromages fondus, les pâtes molles et les crèmes de fromage. Les formes de ces produits fromagers sont également multiples. On trouve par exemple les portions, les tranches et blocs et les crèmes à tartiner. Par ailleurs, la composition de ces produits peut être multiple selon les spécificités gustatives et nutritionnelles recherchées. Le produit fromager pourra ainsi être aromatisé ou allégé en matière grasse ou en lactose.

Chaque produit fromager doit ainsi répondre à des caractéristiques de forme, de texture, de fonctionnalités et de propriétés nutritionnelles particulières qui impliquent des procédés de fabrication adaptés.

A titre d'exemple, les fromages fondus sont traditionnellement fabriqués par fonte d'un fromage ou d'un mélange de fromages éventuellement additionnés d'autres produits laitiers.

La fabrication de fromage fondu traditionnelle consiste ainsi en deux étapes essentielles.

En premier lieu, la fabrication de fromage à partir de lait au cours de laquelle se succèdent les opérations connues d'emprésurage, de coagulation - décaillage, de soutirage, de pressage et enfin d'affinage.

Ensuite, le fromage, ou le plus souvent un mélange de fromages affinés, est broyé et mélangé avec divers ingrédients protéiques laitiers tels que de la poudre de lait, des caséines ou des caséinates, ce qui permet de rééquilibrer la composition protéique au regard d'une part de la qualité protéique des fromages affinés utilisés, et d'autre part de la composition protéique du fromage fondu visée.

Il peut également être prévu d'ajouter au mélange des matières grasses telles que de la crème et/ou du beurre.

Le mélange est ensuite fonctionnalisé par des traitements concomitants chimiques, thermiques et mécaniques. A cet effet, des sels de fonte tels que des citrates, des orthophosphates ou des polyphosphates sous forme sodique sont ajoutés au mélange. Le mélange obtenu subit ensuite une étape de stabilisation par cuisson-stérilisation à des températures comprises entre 70 et 140°C.

Au cours de ces étapes, le pH est ajusté de façon à déterminer la forme des molécules protéiques du fromage fondu.

Enfin, les étapes de crémage et texturation finalisent la réorganisation du réseau protéique avant le conditionnement.

Ainsi, la fabrication de fromage fondu est soumise à la variabilité des matières premières résultant de la diversité d'origine des fromages utilisés et de leurs évolutions liées au stockage.

De façon plus générale, les exigences sur les produits fromagers tant en matière de texture que de qualités nutritionnelles s'opposent à ce caractère incontrôlable des matières premières.

Dans ce contexte, la présente invention vise une nouvelle technologie pour fabriquer des produits fromagers permettant de pallier les inconvénients précités, et notamment en permettant de pouvoir contrôler précisément la composition du produit fromager obtenu selon un schéma commun de procédé.

A cet effet, le procédé de l'invention consiste en un procédé de préparation d'une poudre fromagère en vue de la reconstitution d'un produit fromager qui est essentiellement **caractérisé en ce qu'il** comporte au moins les étapes de :
- réalisation d'un mélange laitier comportant des composants constitués notamment de matière grasse et de matière protéique et dont les teneurs respectivement en matière grasse et matière protéique relativement à la teneur en extrait sec du mélange sont ajustées selon les teneurs correspondantes visées dans le produit fromager après reconstitution,
- emprésurage, coagulation et obtention d'un coagulum,
- découpage du coagulum et obtention d'un mélange fromager,
- fonctionnalisation du mélange fromager par au moins une opération d'émulsification et obtention d'un mélange fromager fonctionnalisé,
- séchage du mélange fromager fonctionnalisé et obtention d'une poudre fromagère.

Le procédé de l'invention est particulièrement innovant en ce que le produit fromager est fabriqué à partir de lait traité selon un procédé fromager en conférant un caractère reconstituable à la poudre fromagère obtenue et en stabilisant les fonctionnalités par l'opération de séchage. Par ailleurs, la composition du produit intermédiaire, la poudre fromagère, est ajustée directement dans la cuve de fromagerie lors de la réalisation du mélange laitier.

Le procédé de l'invention peut également comporter les caractéristiques optionnelles suivantes considérées isolément ou selon toutes les combinaisons techniques possibles :
- la teneur en matière grasse du mélange laitier est ajustée par ajout d'une quantité contrôlée d'un ou de plusieurs composants laitiers constitués notamment de matière grasse, et la teneur en matière protéique du mélange laitier est ajustée par ajout d'une quantité contrôlée d'un ou de plusieurs composants laitiers constitués notamment de matière protéique.
- la teneur en extrait sec du mélange laitier est ajustée par ajout d'une quantité contrôlée d'un ou de plusieurs composants laitiers sous forme séchée dans le mélange laitier, en tenant compte de la teneur en extrait sec des autres composants laitiers du mélange laitier sous forme fluide.
- la teneur en matière grasse du mélange laitier est ajustée par ajout d'une quantité contrôlée de lait entier et/ou de crème, et la teneur en matière protéique du mélange laitier est ajustée par ajout d'une quantité contrôlée de lait entier et/ou de lait écrémé et/ou de concentré de protéine sérique obtenue par ultrafiltration de sérum et/ou de rétentat de microfiltration ou d'ultrafiltration de lait écrémé et/ou de poudre de lait écrémé et/ou de poudre de rétentat de microfiltration ou d'ultrafiltration de lait écrémé et/ou de crème.
- la teneur en extrait sec du mélange laitier est ajustée par ajout d'une quantité contrôlée de poudre de lait écrémé et/ou de poudre de rétentat de microfiltration ou d'ultrafiltration de lait écrémé, en tenant compte des teneurs relatives en concentré de protéine sérique obtenue par ultrafiltration de sérum et/ou en rétentat de microfiltration ou d'ultrafiltration de lait écrémé et/ou en crème dans le mélange laitier.
- le procédé comprend une ou plusieurs étapes de soutirage successives après l'étape de découpage du coagulum.
- la teneur en lactose relativement à la teneur en extrait sec du mélange laitier est ajustée par ajout d'une quantité contrôlée de chacun des composants laitiers constituant le mélange laitier et selon la teneur correspondante en lactose visée dans le produit fromager après reconstitution.
- la teneur en lactose relativement à la teneur en extrait sec du mélange laitier, est ajustée :
- par ajout d'une quantité contrôlée de chacun des composants laitiers constituant le mélange laitier, et
- par le contrôle du volume de lactosérum soutiré lors de ou des étapes de soutirage,
   selon la teneur correspondante en lactose visée dans le produit fromager après reconstitution.
- l'étape de fonctionnalisation comporte une opération d'émulsification par voie chimique à une température comprise entre 45 et 65°C.
- l'émulsification par voie chimique est réalisée par ajout d'au moins un sel émulsifiant à base de citrates, de phosphates de types diphosphates, triphosphates, polyphosphates et/ou orthophosphates et/ou de lactates de sodium et/ou de potassium.
- le procédé comporte une opération de cisaillement subséquente à l'opération d'émulsification par voie chimique.
- l'étape de fonctionnalisation comporte une opération d'émulsification par voie mécanique réduisant la taille moyenne des particules à moins de 500 micromètres.
- l'étape d'acidification est réalisée soit lors de l'étape de préparation du mélange laitier pour l'obtention d'un mélange laitier dont le pH est compris entre 5 et 6, soit lors de l'étape de fonctionnalisation.
- l'étape de séchage est réalisée par séchage par atomisation.
- le mélange fromager fonctionnalisé comporte une teneur en matière grasse relative à la teneur en extrait sec comprise entre 40 et 50%, une teneur en matière protéique relative à la teneur en extrait sec comprise entre 28 et 40%, et éventuellement une teneur en lactose relative à la teneur en extrait sec comprise entre 10 et 20%.
- le mélange fromager fonctionnalisé comporte une teneur en matière grasse relative à la teneur en extrait sec comprise entre 48 et 55%, une teneur en matière protéique relative à la teneur en extrait sec comprise entre 18 et 25%, et éventuellement une teneur en lactose relative à la teneur en extrait sec comprise entre 13 et 25%.
- le mélange fromager fonctionnalisé comporte une teneur en matière grasse relative à la teneur en extrait sec comprise entre 50 et 55%, une teneur en matière protéique relative à la teneur en extrait sec comprise entre 28 et 35%, et éventuellement une teneur en lactose relative à la teneur en extrait sec comprise entre 5 et 10%.
- le mélange fromager fonctionnalisé comporte une teneur en matière grasse relative à la teneur en extrait sec comprise entre 65 et 75%, une teneur en matière protéique relative à la teneur en extrait sec comprise entre 15 et 20%, et éventuellement une teneur en lactose relative à la teneur en extrait sec comprise entre 3 et 10%.

L'invention concerne en outre un procédé de préparation d'un produit fromager qui est essentiellement **caractérisé en ce qu'il** comprend au moins une étape de reconstitution consistant en au moins une opération de mélange d'un composant liquide avec la poudre fromagère obtenue par le procédé précédemment énoncé.

Le procédé de fabrication d'un fromage fondu peut également comporter les caractéristiques optionnelles suivantes considérées isolément ou selon toutes les combinaisons techniques possibles :
- la proportion de composant liquide est comprise entre 40 et 65%, et la proportion de poudre fromagère est comprise entre 35 et 60%.
- le composant liquide est de l'eau.
- l'étape de reconstitution comporte en outre une étape d'ajout de colorant et/ou d'arômes et/ou de gélifiant et/ou de fromages.
- le procédé comprend une étape de cuisson-stérilisation subséquente à l'étape de mélange du composant liquide avec la poudre de fromage fondu.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est un schéma synoptique du procédé de préparation de la poudre fromagère de l'invention selon une première variante de réalisation,
- la figure 2 est un schéma synoptique du procédé de préparation de la poudre fromagère de l'invention selon une seconde variante de réalisation, et
- la figure 3 est un schéma synoptique du procédé de préparation du produit fromager de l'invention par reconstitution à partir de la poudre fromagère selon la première ou la seconde variante.

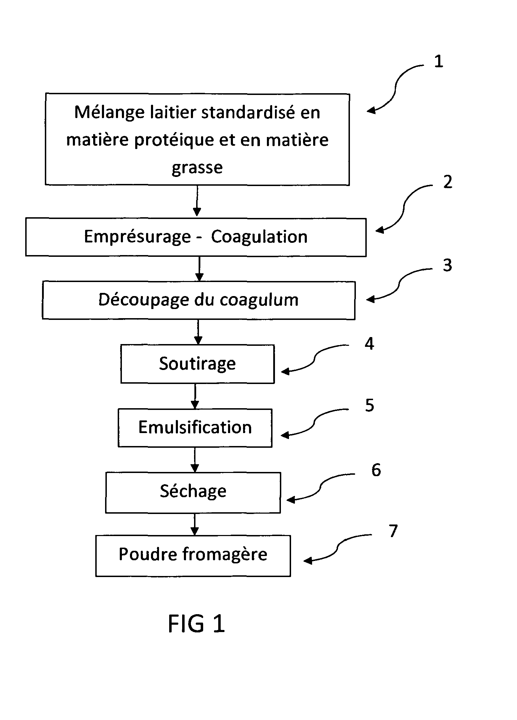

En référence à la figure 1, un mélange laitier 1 est réalisé par mélange de différents composants laitiers choisis pour contrôler les teneurs en matière grasse, matière protéique et le cas échéant lactose du mélange laitier 1.

Le teneur en matière grasse du mélange laitier 1 est contrôlée par ajout de lait entier et/ou de crème dans des quantités déterminées.

La teneur en matière protéique est ajustée par ajout de lait entier et/ou de lait écrémé et/ou de concentré de protéine sérique obtenue par ultrafiltration de sérum et/ou de rétentat de microfiltration ou d'ultrafiltration de lait écrémé et/ou de poudre de lait écrémé et/ou de poudre de rétentat de microfiltration ou d'ultrafiltration de lait écrémé et/ou de crème dans des quantités déterminées.

La teneur en lactose est ajustée selon les teneurs relatives des composants laitiers choisis.

Ces teneurs respectives en matière grasse, en matière protéique et le cas échéant en lactose dans le mélange laitier 1 sont ajustées selon le produit fini, c'est-à-dire le produit fromager après reconstitution, que l'on souhaite obtenir.

Plus précisément, les rapports respectifs entre la teneur en matière grasse et la teneur en extrait sec, entre la teneur en matière protéique et la teneur en extrait sec, et le cas échéant entre la teneur en lactose et la teneur en extrait sec sont contrôlés depuis l'élaboration du mélange laitier et selon le produit final visé.

A cet effet, le contrôle de la teneur en extrait sec du mélange laitier s'effectue par ajustement d'une quantité contrôlée de poudre de lait écrémé et/ou de poudre de rétentat de microfiltration ou d'ultrafiltration de lait écrémé. Le contrôle de la teneur en extrait sec du mélange laitier nécessite également de tenir compte des teneurs relatives en concentré de protéine sérique obtenue par ultrafiltration de sérum et/ou en rétentat de microfiltration ou d'ultrafiltration de lait écrémé et/ou en crème qui comporte une quantité non négligeable d'extrait sec.

Le mélange laitier 1 est ensuite réchauffé à une température comprise entre 30 et 36°C puis subit une opération d'emprésurage - coagulation 2 qui est réalisé au moyen d'enzymes coagulantes telles que des enzymes animales (la présure) ou des enzymes végétales ou microbiennes.

Le mélange subit alors une étape de découpage du coagulum 3. Ces opérations correspondent à celles utilisés traditionnellement pour la fabrication de fromage.

Un soutirage 4 est ensuite réalisé. Cette opération est également réalisée pour la fabrication de fromage traditionnel affiné.

Dans le procédé de l'invention, cette opération de soutirage 4 permet d'abord de contrôler la teneur en extrait sec du mélange. En effet, le mélange est destiné à être séché. L'opération de séchage ne peut être réalisée de façon économique que pour un mélange dont la teneur en extrait sec est supérieure à environ 34% en poids.

Par ailleurs, l'opération de soutirage 4 permet également de contrôler la teneur en lactose dans le produit fini. Lorsque le produit visé doit comporter une teneur particulière en lactose, le volume de soutirage est ajusté en conséquence. Ainsi, plusieurs opérations de soutirage peuvent être réalisées selon la capacité de soutirage, un ajout d'eau pouvant être effectué entre chaque soutirage.

Après l'opération de soutirage 4, la fonctionnalisation du mélange fromager obtenu est réalisée directement dans la cuve de fromagerie.

La fonctionnalisation consiste en une ou plusieurs opérations d'émulsification 5. Cette opération peut être réalisée par voie chimique et/ou par voie mécanique accompagnées ou non d'un traitement thermique.

Par voie chimique, les sels émulsifiants, autrement dénommés sels de fonte, pouvant être utilisés, sont notamment des citrates, des phosphates de types diphosphates, triphosphates, polyphosphates, orthophosphates et/ou des lactates de sodium et/ou de potassium, ou encore des lactates.

En lieu et place de la voie chimique d'émulsification, on peut prévoir une émulsification mécanique consistant par exemple à appliquer de fortes contraintes de cisaillement générées par la vitesse et la forme des outils utilisés et visant à réduire la taille moyenne des particules à moins de 500 micromètres pour obtenir une phase homogène et stable jusqu'à l'opération de séchage ultérieure du produit.

Lorsque l'opération d'émulsification est effectuée par voie chimique, une opération subséquente de traitement mécanique, par exemple par cisaillement, est de préférence réalisée.

La fonctionnalisation par émulsification chimique peut être réalisée à des températures comprises entre 45 et 65°C. Le seuil inférieur de 45°C correspond à une température pour laquelle les protéines sont dans un état favorable à l'émulsification, et le seuil supérieur de 65°C correspond à une température pour laquelle apparaît le phénomène de coagulation des protéines sériques. Cette faible température de fonctionnalisation permet notamment de conserver les molécules pour les rendre aptes à la reconstitution après l'opération de séchage.

Il est à noter que le chauffage à des températures comprises entre 45 et 65 °C peut être remplacé par une action mécanique.

Il est ainsi entendu que les voies de fonctionnalisation chimique, thermique et mécanique sont combinées entre elles de façon à réaliser l'opération d'émulsification.

Selon le procédé de l'invention, la fonctionnalisation du mélange ne nécessite pas de traitement thermique de pasteurisation à cette étape en raison de l'utilisation de matières premières dans le mélange laitier qui sont déjà pasteurisées.

Il est à noter qu'une opération d'acidification non représentée est effectuée, soit lors de l'opération de préparation du mélange laitier 1, soit au moment de la fonctionnalisation, soit à l'étape de reconstitution.

Si nécessaire, le mélange peut être stocké et transporté avant l'opération suivante de séchage 6. Dans ce cas le mélange sera refroidi à une température d'environ 8 à 10°C.

L'opération de séchage est réalisée dans une tour de séchage par atomisation adaptée, on obtient alors à l'issue de cette opération de séchage de la poudre fromagère 7.

Cette poudre fromagère 7, de part sa consistance, peut être conditionnée, stockée, transportée et conservée.

Il est ainsi possible de prévoir la fabrication de la poudre fromagère 7 sur un site et la reconstitution du produit fromager sur un autre site.

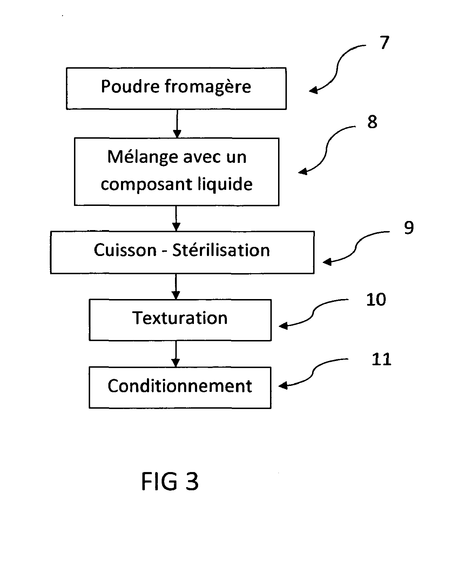

En référence à la figure 3, la reconstitution du produit fromager est réalisée par mélange 8 de la poudre fromagère 7 avec un composant liquide.

Le composant liquide peut être de l'eau ou tout autre composant liquide selon le produit fromagé visé.

La proportion de composant liquide est choisie selon la teneur en extrait sec du produit fini visé.

Le mélange subit alors une opération de cuisson-stérilisation 9 et une opération de texturation 10 avant d'être conditionné 11.

L'opération de cuisson-stérilisation 9 est avantageusement réalisée à ce stade du procédé et non au moment de la fonctionnalisation pour les raisons exposées précédemment.

On peut en outre prévoir lors de la reconstitution l'ajout de colorants, d'arômes, de composants texturant tels que des gélifiants et/ou de fromages.

Le produit obtenu est un produit fromager pouvant être de type fromage fondu, pâte molle, crème de fromage comparables aux mêmes produits obtenus par les filières traditionnelles.

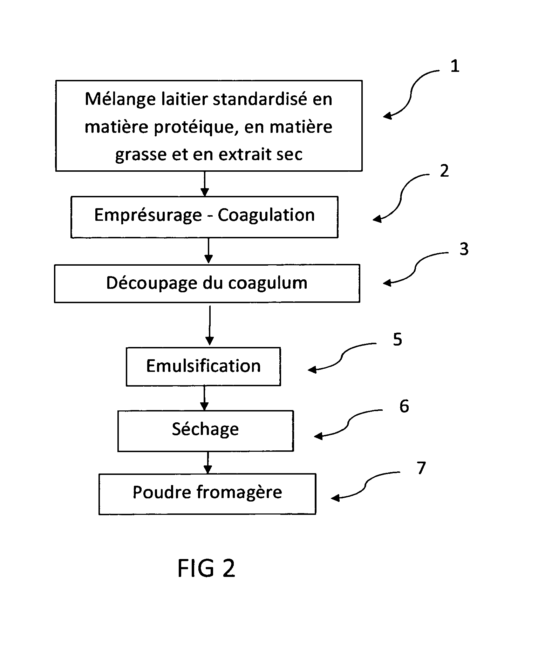

En référence à la figure 2 et selon une seconde variante de l'invention, le procédé de préparation de la poudre fromagère 7 ne comporte pas d'opération de soutirage.

Dans ce cas, le mélange laitier 1 est réalisé par mélange de différents composants laitiers choisis pour contrôler, outre les teneurs en matière grasse et matière protéique, la teneur en extrait sec.

A cet effet, la teneur en extrait sec est principalement ajustée par ajout de poudre de lait écrémé et/ou de poudre de rétentat de microfiltration ou d'ultrafiltration de lait écrémé dans des quantités déterminées.

Il est également tenu compte des teneurs en concentré de protéine sérique obtenue par ultrafiltration de sérum et/ou rétentat de microfiltration ou d'ultrafiltration de lait écrémé et/ou de crème qui présentent une teneur en extrait sec non négligeable.

Les autres opérations de préparation de la poudre fromagère 7 restent inchangées. Il en va de même pour la préparation du produit fromager reconstitué tel que précédemment décrit en référence à la figure 3.

Il est particulièrement remarquable dans le procédé de l'invention de pouvoir contrôler les teneurs en matière protéique, en matière grasse et le cas échéant en lactose du produit fini au niveau de l'étape de préparation du mélange laitier.

En effet, dans le cas où le procédé ne prévoit pas d'opération de soutirage, les pourcentages en matière grasse, matière protéique et le cas échéant en lactose relativement à l'extrait sec, sont ajustés dans le mélange laitier selon ces mêmes pourcentages visés dans le produit fini et en tenant compte de l'ajout des matières solides qui augmentent la teneur en extrait sec, notamment des sels de fonte lorsque ces derniers sont utilisés lors de l'opération d'émulsification.

Dans le cas où le procédé prévoit des opérations de soutirage, il sera tenu compte en plus de la teneur en extrait sec sous forme de lactose évacuée en niveau du soutirage et des teneurs moindres en matière protéique et en matière grasse également évacuées lors du soutirage.

Les calculs permettant de déterminer les composants et leurs teneurs respectives dans le mélange laitier selon le produit fini visé seront donc ajustés sur la base d'un extrait sec constitué de matière protéique, de matière grasse de lactose et de minéraux.

Les exemples ci-dessous de préparation de mélange laitier fonctionnalisé, de fabrication de poudre fromagère et de reconstitution d'un produit fromager sont donnés à titre non limitatifs.

### Exemple 1 : Préparation d'une poudre fromagère pour l'élaboration d'un produit fromager sous forme de tranches et blocs

On vise dans cet exemple un fromage fondu destiné à la réalisation de tranches et blocs communément dénommés « slices » et présentant 43% en poids d'extrait sec, 18,5% en poids de matière grasse et 15,5% en poids de matière protéique, soit des teneurs relatives à la teneur en extrait sec de 43% de matière grasse et de 36% de matière protéique.

Le mélange laitier standardisé est réalisé par mélange dans une cuve de fromagerie de 945 litres de lait entier et de 45 litres de concentré de protéine sérique obtenue par ultrafiltration de sérum. De l'acide citrique est ajouté de façon à ce que le mélange présente un pH de 5,85.

Le mélange laitier obtenu présente une teneur en poids en extrait sec de 123 g/L, une teneur en poids en matière grasse de 31 g/L et une teneur en poids en matière protéique de 35 g/L, soit une teneur relative à la teneur en extrait sec de 25% de matière grasse et de 28% de matière protéique.

Le mélange obtenu est ensuite réchauffé à 33°C puis la coagulation est réalisée par emprésurage. A cet effet, une dose 15ml/1000L de présure est ajoutée. La coagulation est effectuée en 30 minutes. Le mélange coagulé est ensuite réchauffé à 37°C.

Deux cycles de soutirage de lactosérum sont réalisés par un premier soutirage de 565 litres de lactosérum, l'ajout de 565 litres d'eau, puis un second soutirage de 565 litres de lactosérum.

La fonctionnalisation du mélange obtenu après soutirage est directement réalisée dans la cuve de fromagerie. A cet effet, la température du mélange est portée à 62°C, 6kg de sels de fonte à base d'orthophosphates, de citrates et de polyphosphates sont ajoutés et un cisaillement du mélange est réalisé dans un mélangeur adapté.

Le mélange obtenu présente une teneur en poids en extrait sec de 142 g/L, une teneur en poids en matière grasse de 49,5 g/L et une teneur en poids en matière protéique de 52 g/L, soit une teneur relative à la teneur en extrait sec de 35% de matière grasse et de 37% de matière protéique.

### Exemple 2 : Préparation d'un mélange fonctionnalisé en vue de l'élaboration d'un produit fromager sous forme de tranches et blocs

On vise dans cet exemple un fromage fondu destiné à la réalisation de tranches et blocs, communément dénommés « slices », présentant 45% en poids d'extrait sec, 18,5% en poids de matière grasse, 15,5% en poids de matière protéique et 5% en poids de lactose, soit une teneur relative à la teneur en extrait sec de 41 % de matière grasse, 34% de matière protéique et 11 % de lactose.

Le mélange laitier standardisé est réalisé par mélange dans une cuve de fromagerie de 2068 litres de lait entier, 95 litres de concentré de protéine sérique obtenue par ultrafiltration de sérum et 44 litres de crème. De l'acide citrique est ajouté de façon à ce que le mélange présente un pH de 5,73.

Le mélange laitier obtenu présente une teneur en poids en extrait sec de 125,5 g/L, une teneur en poids en matière grasse de 39 g/L, une teneur en poids en matière protéique de 31 g/L et une teneur en poids de lactose de 47 g/L, soit une teneur relative à la teneur en extrait sec de 31% de matière grasse, 25% de matière protéique et 38% de lactose.

Le mélange obtenu est ensuite réchauffé à 33°C puis la coagulation est réalisée par emprésurage. A cet effet, une dose de 15m1/1000L de présure est ajoutée.

La coagulation est effectuée en 50 minutes. Le mélange coagulé est ensuite réchauffé à 37°C.

Deux cycles de soutirage de lactosérum sont réalisés par un premier soutirage de 1435 litres de lactosérum, l'ajout de 700 litres d'eau, puis un second soutirage de 825 litres de lactosérum.

La fonctionnalisation du mélange obtenu après soutirage est directement réalisée dans la cuve de fromagerie. A cet effet, la température du mélange est portée à 50°C, 12,7kg de sels de fonte à base d'orthophosphates, de citrates et de polyphosphates, et 2,8 kg de sel de cuisine sont ajoutés, et un cisaillement du mélange est réalisé dans un mélangeur adapté.

Le mélange laitier fonctionnalisé obtenu présente une teneur en poids en extrait sec de 200 g/L, une teneur en poids en matière grasse de 87 g/L, une teneur en poids en matière protéique de 64 g/L et une teneur en poids de lactose de 23 g/L, soit une teneur relative à la teneur en extrait sec de 43,5% de matière grasse, 32% de matière protéique et 11,5% de lactose.

### Exemple 3 : Préparation d'un mélange fonctionnalisé lacté en vue de l'élaboration d'un produit fromager sous forme de tranches et blocs

Comme pour l'exemple 2, on vise un fromage fondu destiné à la réalisation de tranches et de blocs, communément dénommés « slices », présentant 45% d'extrait sec, 18,5% de matière grasse, 15,5% de matière protéique et 5% de lactose, soit une teneur relative à la teneur en extrait sec de 41% de matière grasse, 34% de matière protéique et 11 % de lactose.

Le mélange laitier standardisé est réalisé par mélange dans une cuve de fromagerie de 940 litres de lait entier, 43 litres de concentré de protéine sérique obtenue par ultrafiltration de sérum, 20 kg de poudre de lait et 50 litres de crème.

Le mélange laitier obtenu présente une teneur en poids en extrait sec de 150,5 g/L, une teneur en poids en matière grasse de 50 g/L, une teneur en poids en matière protéique de 36 g/L et une teneur en poids de lactose de 51 g/L, soit une teneur relative à la teneur en extrait sec de 33% de matière grasse, 24% de matière protéique et 34% de lactose.

Le mélange obtenu est ensuite réchauffé à 33°C puis la coagulation est réalisée par emprésurage. A cet effet, une dose de 100m1/1000L de présure est ajoutée.

La coagulation est effectuée en 30 minutes. Le mélange coagulé est ensuite réchauffé à 37°C.

Deux cycles de soutirage de lactosérum sont réalisés par un premier soutirage de 500 litres de lactosérum, l'ajout de 360 litres d'eau, puis un second soutirage de 400 litres de lactosérum. 20 kg de fines de fromageries sont ajoutés au mélange.

La fonctionnalisation du mélange obtenu après soutirage est directement réalisée dans la cuve de fromagerie. A cet effet, la température du mélange est portée à 50°C, 7,2kg de sels de fonte à base d'orthophosphates, de citrates et de polyphosphates, et 1,2 kg de sel de cuisine sont ajoutés, et un cisaillement du mélange est réalisé dans un mélangeur adapté. En même temps que la fonctionnalisation, 0,7 kg d'acide citrique sont ajoutés au mélange.

Le mélange laitier fonctionnalisé obtenu présente une teneur en poids en extrait sec de 195 g/L, une teneur en poids en matière grasse de 78 g/L, une teneur en poids en matière protéique de 64 g/L et une teneur en poids de lactose de 27 g/L, soit une teneur relative à la teneur en extrait sec de 40% de matière grasse, 33% de matière protéique et 14% de lactose.

### Exemple 4 : Préparation de poudre fromagère et reconstitution d'un produit fromager de type fromage fondu pour tranches et blocs à partir des mélanges fonctionnalisés des exemples 2 et 3

Les mélanges laitiers fonctionnalisés des exemples 2 et 3 sont mélangés ensemble puis séchés par atomisation.

La poudre de fromage fondu obtenue présente 97% en poids d'extrait sec, 41,5 % en poids de matière grasse, 31% en poids de matière protéique et 10,5% en poids de lactose, soit une teneur relative à la teneur en extrait sec de 43% de matière grasse, 32% de matière protéique et 11 % de lactose.

La reconstitution du fromage fondu est effectuée par mélange de 45% d'eau et 55% de poudre de fromage fondu. Une correction du pH par ajout d'acide citrique et une correction de la teneur en sel sont appliquées.

Le fromage fondu obtenu présente 44% en poids d'extrait sec, 18,5% en poids de matière grasse, 15% en poids de matière protéique et 4,5% en poids de lactose, soit une teneur relative à la teneur en extrait sec de 42% de matière grasse, 34% de matière protéique et 10% de lactose.

### Exemple 5 : Préparation de poudre fromagère et reconstitution de produit fromager de type fromage fondu pour tranches et blocs

On cherche à préparer un fromage fondu destiné à la réalisation de tranches et de blocs, communément dénommés « slices », présentant 45% en poids d'extrait sec, 20,5% en poids de matière grasse, 13,5% en poids de matière protéique et 6,5% en poids de lactose, soit une teneur relative à la teneur en extrait sec de 46% de matière grasse, 30% de matière protéique et 14% de lactose.

Le mélange laitier standardisé est réalisé par mélange dans une cuve de fromagerie de 640 litres de rétentat de microfiltration ou d'ultrafiltration de lait écrémé, 76 kg de poudre de rétentat de microfiltration ou d'ultrafiltration de lait écrémé et 360 litres de crème.

Le mélange laitier obtenu présente une teneur en poids en extrait sec de 314 g/L, une teneur en poids en matière grasse de 145 g/L et une teneur en poids en matière protéique de 102 g/L, soit une teneur relative à la teneur en extrait sec de 46% de matière grasse et 32,5% de matière protéique.

Le mélange obtenu est ensuite réchauffé à 33°C puis la coagulation est réalisée par emprésurage. A cet effet, une dose de 150ml/1000L de présure est ajoutée. La coagulation est effectuée en 30 minutes.

La fonctionnalisation du mélange obtenu après brassage est directement réalisée dans la cuve de fromagerie. A cet effet, la température du mélange est portée à 55°C, 19,4kg de sels de fonte à base d'orthophosphates, de citrates et de polyphosphates, et 6 kg de sel de cuisine sont ajoutés, et un cisaillement du mélange est réalisé dans un mélangeur adapté. En même temps que la fonctionnalisation, 3,9 kg d'acide citrique sont ajoutés au mélange.

Le mélange obtenu présente une teneur en poids en extrait sec de 333 g/L, une teneur en poids en matière grasse de 145 g/L et une teneur en poids en matière protéique de 100 g/L, soit une teneur relative à la teneur en extrait sec de 44% de matière grasse et 30% de matière protéique.

Le mélange laitier fonctionnalisé est ensuite séché par atomisation.

La poudre de fromage fondu obtenue présente 98% d'extrait sec, 42% de matière grasse, 29% de matière protéique et 18% de lactose, soit une teneur relative à la teneur en extrait sec de 43% de matière grasse, 29% de matière protéique et 18% de lactose.

La reconstitution du fromage fondu est effectuée par mélange de 46% en poids d'eau et de 54% en poids de poudre de fromage fondu.

Le fromage fondu reconstitué obtenu présente 45% en poids d'extrait sec, 19% en poids de matière grasse et 13% en poids de matière protéique, soit une teneur relative à la teneur en extrait sec de 42% de matière grasse et 29% de matière protéique.

### Exemple 6 : Préparation d'un mélange laitier fonctionnalisé pour la fabrication d'un produit fromager sous forme de portions de fromage fondu

On cherche à préparer un produit fromager sous forme de portions de fromage fondu présentant 41% en poids d'extrait sec, 21% en poids de matière grasse, 8,5% en poids de matière protéique et 6,5% en poids de lactose, soit une teneur relative à la teneur en extrait sec de 51% de matière grasse, 21% de matière protéique et 16% de lactose.

Le mélange laitier standardisé est réalisé par mélange dans une cuve de fromagerie de 990 litres de lait entier, 55 litres de concentré de protéine sérique obtenue par ultrafiltration de sérum, et 117 litres de crème.

Le mélange laitier obtenu présente une teneur en poids en extrait sec de 159 g/L, une teneur en poids en matière grasse de 76 g/L, une teneur en poids en matière protéique de 31 g/L et une teneur en lactose de 44g/L, soit une teneur relative à la teneur en extrait sec de 48% de matière grasse, 19,5% de matière protéique et 28% de lactose.

Le mélange obtenu est ensuite réchauffé à 33°C puis la coagulation est réalisée par emprésurage. A cet effet, une dose de 50ml/1000L de présure est ajoutée. La coagulation est effectuée en 70 minutes. Le mélange coagulé est ensuite réchauffé à 55°C.

Un cycle de soutirage de lactosérum est réalisé par soutirage de 510 litres de lactosérum.

La fonctionnalisation du mélange obtenu après soutirage est directement réalisée dans la cuve de fromagerie. A cet effet, la température du mélange est maintenue à 55°C, 6,7kg de sels de fonte à base d'orthophosphates, de citrates et de polyphosphates, et 2,5 kg de sel de cuisine sont ajoutés, et un cisaillement du mélange est réalisé dans un mélangeur adapté. En même temps que la fonctionnalisation, 2 kg d'acide citrique est ajouté au mélange.

Le mélange laitier coagulé et fonctionnalisé obtenu présente une teneur en poids en extrait sec de 242 g/L, une teneur en poids en matière grasse de 126 g/L, une teneur en poids en matière protéique de 49,5 g/L et une teneur en lactose de 41 g/L, soit une teneur relative à la teneur en extrait sec de 52% de matière grasse, 20,5% de matière protéique et 17% de lactose.

### Exemple 7: Préparation d'une poudre fromagère et reconstitution d'un produit fromager sous forme de portions de fromage fondu.

On cherche à préparer un produit fromager sous forme de portions de fromage fondu présentant 41% en poids d'extrait sec, 21% en poids de matière grasse, 8,5% en poids de matière protéique et 6,5% en poids de lactose, soit une teneur relative à la teneur en extrait sec de 51% de matière grasse, 21% de matière protéique et 16% de lactose.

Le mélange laitier standardisé est réalisé par mélange dans une cuve de fromagerie de 47 litres de concentré de protéine sérique obtenue par ultrafiltration de sérum, 225 litres de rétentat de microfiltration ou d'ultrafiltration de lait écrémé, 20 kg de poudre de rétentat de lait et 191 litres de crème.

Le mélange laitier obtenu présente une teneur en poids en extrait sec de 311,5 g/L, une teneur en poids en matière grasse de 178 g/L, une teneur en poids en matière protéique de 66,5 g/L et une teneur en poids en lactose de 58,5 g/L, soit une teneur relative à la teneur en extrait sec de 57% de matière grasse, 21% de matière protéique et 19% de lactose.

Le mélange obtenu est ensuite réchauffé à 33°C puis la coagulation est réalisée par emprésurage. A cet effet, une dose de 90ml/1000L de présure est ajoutée. La coagulation est effectuée en 25 minutes. Le mélange coagulé est ensuite réchauffé à 55°C.

La fonctionnalisation du mélange obtenu après brassage est directement réalisée dans la cuve de fromagerie. A cet effet, la température du mélange est maintenue à 55°C, 7,4kg de sels de fonte à base d'orthophosphates et de polyphosphates, et 2,5 kg de sel de cuisine sont ajoutés, et un cisaillement du mélange est réalisé dans un mélangeur adapté. En même temps que la fonctionnalisation, 2,5 kg d'acide citrique sont ajoutés au mélange.

Le mélange obtenu présente une teneur en poids en extrait sec de 273 g/L, une teneur en poids en matière grasse de 138 g/L, une teneur en poids en matière protéique de 57,5 g/L et une teneur en poids de lactose de 56 g/L, soit une teneur relative à la teneur en extrait sec de 50,5% de matière grasse, 21% de matière protéique et 20,5% de lactose.

Le mélange fonctionnalisé est ensuite séché par atomisation.

La poudre de fromage fondu obtenue présente une teneur en poids en extrait sec de 97 %, une teneur en poids en matière grasse de 46,5 % et une teneur en poids en matière protéique de 20,5 %, soit une teneur relative à la teneur en extrait sec de 48% de matière grasse et 21% de matière protéique.

Deux reconstitutions de fromage fondu sont effectuées :

La première reconstitution est réalisée par mélange de 42% d'eau et 58% de poudre de fromage fondu.

Le fromage fondu obtenu présente une teneur en poids en extrait sec de 41 %, une teneur en poids en matière grasse de 20 % et une teneur en poids en matière protéique de 8,6 %, soit une teneur relative à la teneur en extrait sec de 49% de matière grasse et de 21 % de matière protéique.

La seconde reconstitution est réalisée par mélange de 46% d'eau et 54% de poudre de fromage fondu.

Le fromage fondu reconstitué obtenu présente une teneur en poids en extrait sec de 45 %, une teneur en poids en matière grasse de 21 % et une teneur en poids en matière protéique de 9 %, une teneur relative à la teneur en extrait sec de 47% de matière grasse et de 20% de matière protéique.

### Exemple 8: Préparation d'une poudre fromagère et reconstitution d'un produit fromager sous forme de portions de fromage fondu

On cherche à préparer un produit fromager sous forme de portions de fromage fondu présentant 41% en poids d'extrait sec, 21% en poids de matière grasse, 8,5% en poids de matière protéique et 6,5% en poids de lactose, soit une teneur relative à la teneur en extrait sec de 51% de matière grasse, 21% de matière protéique et 16% de lactose.

Le mélange laitier standardisé est réalisé par mélange dans une cuve de fromagerie de 1700 litres de lait entier, de 130 litres de concentré de protéine sérique obtenue par ultrafiltration de sérum, 70 kg de poudre de lait et 380 litres de crème.

Le mélange laitier obtenu présente une teneur en poids en extrait sec de 215 g/L, une teneur en poids en matière grasse de 100,5 g/L, une teneur en poids en matière protéique de 41 g/L et une teneur en poids en lactose de 56g/L, soit une teneur relative à la teneur en extrait sec de 47% de matière grasse, 19% de matière protéique et 26% de lactose.

Le mélange obtenu est ensuite réchauffé à 33°C puis la coagulation est réalisée par emprésurage. A cet effet, une dose 75ml/1000L de présure est ajoutée.

La coagulation est effectuée en 40 minutes. Le mélange coagulé est ensuite réchauffé à 55°C.

Un cycle de soutirage de lactosérum est réalisé par soutirage de 1040 litres de lactosérum.

La fonctionnalisation du mélange obtenu après brassage est directement réalisée dans la cuve de fromagerie. A cet effet, la température du mélange est maintenue à 55°C, 15,5kg de sels de fonte à base d'orthophosphates et de polyphosphates, et 6 kg de sel de cuisine sont ajoutés, et un cisaillement du mélange est réalisé dans un mélangeur adapté. En même temps que la fonctionnalisation, 4,9 kg d'acide citrique est ajouté au mélange.

Le mélange obtenu présente une teneur en poids en extrait sec de 323 g/L, une teneur en poids en matière grasse de 164 g/L, une teneur en poids en matière protéique de 67 g/L et une teneur en poids en lactose de 49g/L, soit une teneur relative à la teneur en extrait sec de 51% de matière grasse, 21% de matière protéique et 15% de lactose.

Le mélange est ensuite séché par atomisation.

La poudre de fromage fondu obtenue présente une teneur en poids en extrait sec de 98%, une teneur en poids en matière grasse de 50 %, une teneur en poids en matière protéique de 20 % et une teneur en poids en lactose de 15%, soit une teneur relative à la teneur en extrait sec de 51% de matière grasse, 20,5% de matière protéique et 15% de lactose.

Deux reconstitutions du fromage fondu sont effectuées :

La première reconstitution est réalisée par mélange de 42% d'eau et 58% de poudre de fromage fondu.

Le fromage fondu reconstitué obtenu présente 41 % en poids d'extrait sec, 21 % en poids de matière grasse et 8% en poids de matière protéique, soit une teneur relative à la teneur en extrait sec de 51% de matière grasse et 19,5% de matière protéique.

La seconde reconstitution est réalisée par mélange de 46% d'eau et 54% de poudre de fromage fondu.

Le fromage fondu reconstitué obtenu présente une teneur en poids en extrait sec de 45 %, une teneur en poids en matière grasse de 23 % et une teneur en poids en matière protéique de 9 %, soit une teneur relative à la teneur en extrait sec de 51 % de matière grasse et de 20% de matière protéique.

### Exemple 9 : Préparation d'un mélange laitier fonctionnalisé et séché en vue de la préparation par reconstitution d'un produit fromager sous forme de portions de fromage fondu

On cherche à préparer un mélange laitier fonctionnalisé en vue de la préparation par reconstitution d'un produit fromager sous forme de portions de fromage fondu présentant 45% en poids d'extrait sec, 20,5% en poids de matière grasse et 13,5% en poids de matière protéique, soit une teneur relative à la teneur en extrait sec de 46% de matière grasse et 30% de matière protéique.

Le mélange laitier standardisé est réalisé par mélange dans une cuve de fromagerie de 275 litres de rétentat de microfiltration de lait écrémé, 65 kg de poudre de rétentat de microfiltration de lait écrémé et 235 litres de crème.

Le mélange laitier obtenu présente une teneur en poids en extrait sec de 390 g/L, une teneur en poids en matière grasse de 195 g/L et une teneur en poids en matière protéique de 120g/L, soit une teneur relative à la teneur en extrait sec de 50% de matière grasse et de 31% de matière protéique.

Le mélange obtenu est ensuite réchauffé à 33°C puis la coagulation est réalisée par emprésurage. A cet effet, une dose de 170 ml/1000L de présure est ajoutée.

La coagulation est effectuée en 30 minutes. Le mélange coagulé est ensuite réchauffé à 55°C.

100 litres d'eau sont ajoutés dans la cuve. Aucun soutirage n'est réalisé.

Puis 2,8 kg d'acide citrique sont ajoutés au mélange et un cisaillement du mélange est réalisé dans un mélangeur adapté. L'émulsion du mélange est obtenue par cette opération de cisaillement mécanique.

Le mélange obtenu présente une teneur en poids en extrait sec de 303 g/L, une teneur en poids en matière grasse de 110 g/L et une teneur en poids en matière protéique de 97 g/L, soit une teneur relative à la teneur en extrait sec de 36% de matière grasse et de 32% de matière protéique.

Le mélange coagulé et fonctionnalisé est ensuite séché par atomisation.

La poudre de fromage fondue obtenue présente une teneur en poids en extrait sec de 97,5%, une teneur en poids en matière grasse de 41 % et une teneur en poids en matière protéique de 35 %, soit une teneur relative à la teneur en extrait sec de 42% de matière grasse et de 36% de matière protéique.

### Exemple 10 : Préparation d'un mélange laitier fonctionnalisé et séché, et reconstitution d'un produit fromager de type fromage fondu sous forme de tranches et blocs « Slice On Slice »

On cherche à préparer un produit fromager de type fromage fondu sous forme de tranches et blocs « Slice On Slice », c'est-à-dire des tranches et blocs sans emballages individuels qui présentent une fermeté suffisante pour être empilés et décollés les uns des autres.

On cherche à ce que ce produit fromager présente 54% en poids d'extrait sec, 27,5% en poids de matière grasse, 17% en poids de matière protéique et 4% en poids de lactose, soit une teneur relative à la teneur en extrait sec de 51% de matière grasse, 31,5% de matière protéique et 7,5% de lactose.

Le mélange laitier standardisé est réalisé par mélange dans une cuve de fromagerie de 1180 litres de lait entier, de 80kg de poudre de rétentat de microfiltration ou d'ultrafiltration de lait écrémé et 240 litres de crème.

Le mélange laitier obtenu présente une teneur en poids en extrait sec de 229 g/L, une teneur en poids en matière grasse de 100,5 g/L et une teneur en poids en matière protéique de 58 g/L et une teneur en poids de lactose de 60g/L, soit une teneur relative à la teneur en extrait sec de 44% de matière grasse, 25% de matière protéique et de 26% de lactose.

Le mélange obtenu est ensuite réchauffé à 33°C, puis la coagulation est réalisée par emprésurage. A cet effet, une dose 80 ml/1000L de présure est ajoutée.
La coagulation est effectuée en 20 minutes. Le mélange coagulé est ensuite réchauffé à 55°C.

Trois cycles de soutirage sont effectués.
Un premier cycle de soutirage de lactosérum est réalisé par soutirage de 600 litres de lactosérum. Un volume d'eau équivalent au volume soutiré est ajouté dans la cuve.
Un deuxième cycle de soutirage de lactosérum est réalisé par soutirage de 600 litres de lactosérum. Un volume d'eau équivalent au volume soutiré est ajouté dans la cuve.
Enfin, un troisième cycle de soutirage de lactosérum est réalisé par soutirage de 675 litres de lactosérum.

La fonctionnalisation du mélange obtenu après brassage est directement réalisée dans la cuve de fromagerie. A cet effet, la température du mélange est maintenue à 55°C, 13,3kg de sels de fonte à base d'orthophosphates, de citrates et de polyphosphates, et 5,2 kg de sel de cuisine sont ajoutés, et un cisaillement du mélange est réalisé dans un mélangeur adapté. En même temps que la fonctionnalisation, 3,6 kg d'acide citrique est ajouté au mélange.

Le mélange obtenu présente une teneur en poids en extrait sec de 30 g/L, une teneur en poids en matière grasse de 15,5 g/L, une teneur en poids en matière protéique de 9 g/L et une teneur en poids en lactose de 1,5 g/L, soit une teneur relative à la teneur en extrait sec de 51,5% de matière grasse, 30% de matière protéique et 5% de lactose.

Le mélange coagulé et fonctionnalisé est ensuite séché par atomisation.

La poudre de fromage fondue obtenue présente une teneur en poids en extrait sec de 98%, une teneur en poids en matière grasse de 48 %, une teneur en poids en matière protéique de 30 % et une teneur en poids en lactose de 8%, soit une teneur relative à la teneur en extrait sec de 49% de matière grasse, 31% de matière protéique et 8% de lactose.

La reconstitution est réalisée par mélange de 45% d'eau et 55% de poudre de fromage fondu.

Le fromage fondu reconstitué obtenu présente une teneur en poids en extrait sec de 54 %, une teneur en poids en matière grasse de 26.5 %, une teneur en poids en matière protéique de 16.5 %, une teneur en poids en lactose de 4,4%, soit une teneur relative à la teneur en extrait sec de 49% de matière grasse, de 30,5% de matière protéique et de 8% en lactose.

### Exemple 11 : Préparation d'un mélange laitier fonctionnalisé et séché, et reconstitution d'un produit fromager de type crème de fromage

On cherche à préparer un produit fromager de type crème de fromage communément dénommé « cream cheese » présentant 46% d'extrait sec, 32,5% de matière grasse, 8% de matière protéique et 2,5% de lactose, soit une teneur relative à la teneur en extrait sec de 71% de matière grasse, 17% de matière protéique et 5% de lactose.

Le mélange laitier standardisé est réalisé par mélange dans une cuve de fromagerie de 440 litres de lait entier, de 145 litres d'eau, de 65kg de poudre de rétentat de microfiltration ou d'ultrafiltration de lait écrémé et de 550 litres de crème.

Le mélange laitier obtenu présente une teneur en poids en extrait sec de 324 g/L, une teneur en poids en matière grasse de 217 g/L, une teneur en poids en matière protéique de 51,5 g/L et une teneur en poids de lactose de 33g/L, soit une teneur relative à la teneur en extrait sec de 67% de matière grasse, 16% de matière protéique et de 10% de lactose.

Le mélange obtenu est ensuite réchauffé à 33°C puis la coagulation est réalisée par emprésurage. A cet effet, une dose de 80 ml/1000L de présure est ajoutée.

La coagulation est effectuée en 20 minutes. Le mélange coagulé est ensuite réchauffé à 55°C.

Un cycle de soutirage de lactosérum est réalisé par soutirage de 810 litres de lactosérum.

La fonctionnalisation du mélange obtenu après brassage est directement réalisée dans la cuve de fromagerie. A cet effet, la température du mélange est maintenue à 55°C, 4,5kg de sels de fonte à base d'orthophosphates, de citrates et de polyphosphates, et 3 kg de sel de cuisine sont ajoutés, et un cisaillement du mélange est réalisé dans un mélangeur adapté. En même temps que la fonctionnalisation, 3 kg d'acide citrique est ajouté au mélange.

Le mélange obtenu présente 32% en poids d'extrait sec, 20,5% en poids de matière grasse, 5,5% en poids de matière protéique et 3% en poids de lactose, soit une teneur relative à la teneur en extrait sec de 64% de matière grasse, 17% de matière protéique et 9,5% de lactose.

Le mélange coagulé et fonctionnalisé est ensuite séché par atomisation.

La poudre de crème de fromage obtenue présente une teneur en poids en extrait sec de 99%, une teneur en poids en matière grasse de 66 % et une teneur en poids en matière protéique de 19 %, soit une teneur relative à la teneur en extrait sec de 67% de matière grasse et 19% de matière protéique.

La reconstitution est réalisée par mélange de 55% d'eau et 45% de poudre de crème de fromage.

La crème de fromage reconstituée obtenue présente 44,5 % d'extrait sec, 30 % de matière grasse et 8,5% de matière protéique, soit une teneur relative à la teneur en extrait sec de 67,5% de matière grasse et de 19% de matière protéique.

### Exemple 12 : Préparation d'un mélange laitier fonctionnalisé et séché en vue de la reconstitution d'un produit fromager de type bloc.

On cherche à préparer un produit fromager de type bloc présentant 50% en poids d'extrait sec, 22,5% en poids de matière grasse, 16% en poids de matière protéique et 8% en poids de lactose, soit une teneur relative à la teneur en extrait sec de 45% de matière grasse, 32% de matière protéique et 16% de lactose.

Le mélange laitier standardisé est réalisé par mélange dans une cuve de fromagerie de 1275 litres de lait entier, de 80 kg de poudre de lait, et de 125 litres de crème.

Le mélange laitier obtenu présente une teneur en poids en extrait sec de 211 g/L, une teneur en poids en matière grasse de 85 g/L, une teneur en poids en matière protéique de 47 g/L et une teneur en poids de lactose de 72g/L, soit une teneur relative à la teneur en extrait sec de 40% de matière grasse, 22% de matière protéique et de 34% de lactose.

Le mélange obtenu est ensuite réchauffé à 33°C puis la coagulation est réalisée par emprésurage. A cet effet, une dose de 80 ml/1000L de présure est ajoutée.

La coagulation est effectuée en 20 minutes. Le mélange coagulé est ensuite réchauffé à 55°C.

Un cycle de soutirage de lactosérum est réalisé par soutirage de 875 litres de lactosérum.

La fonctionnalisation du mélange obtenu après brassage est directement réalisée dans la cuve de fromagerie. A cet effet, la température du mélange est maintenue à 55°C et 11,5 kg de sels de fonte à base d'orthophosphates, de citrates et de lactates sont ajoutés, et un cisaillement du mélange est réalisé dans un mélangeur adapté.

Le mélange obtenu présente 32% en poids d'extrait sec, 14% en poids de matière grasse et 8,5% en poids de matière protéique, soit une teneur relative à la teneur en extrait sec de 44% de matière grasse et 27% de matière protéique.

Le mélange coagulé et fonctionnalisé est ensuite séché par atomisation.

La poudre de produit fromager obtenue présente une teneur en poids en extrait sec de 98%, une teneur en poids en matière grasse de 44 % et une teneur en poids en matière protéique de 27%, soit une teneur relative à la teneur en extrait sec de 45% de matière grasse et de 27,5% de matière protéique.

Le procédé de l'invention permet ainsi d'obtenir un produit fromager dans lequel les matières protéiques sont non dégradées ou non protéolysées, ce qui lui confère des fonctionnalités supérieures.

Le procédé de l'invention permet en outre d'obtenir un produit fromager sec à partir duquel un produit fromager peut être reconstitué par ajout de matière liquide, le produit fromager sec n'évoluant pas dans le temps.

Enfin, dans le cadre particulier de l'élaboration de fromages fondus, le procédé de l'invention permet de fabriquer un fromage fondu issu d'une seule et même technologie en permettant ainsi de s'affranchir des problématique inhérentes à l'utilisation de fromages affinés, notamment des problèmes d'hétérogénéité de composition et de protéolyse.

## Revendications

1. Procédé de préparation d'une poudre fromagère en vue de la reconstitution d'un produit fromager, **caractérisé en ce qu'il** comporte au moins les étapes de :
- réalisation d'un mélange laitier (1) comportant des composants constitués notamment de matière grasse et de matière protéique et dont les teneurs respectivement en matière grasse et matière protéique relativement à la teneur en extrait sec du mélange (1) sont ajustées selon les teneurs correspondantes visées dans le produit fromager après reconstitution,
- emprésurage (2), coagulation et obtention d'un coagulum,
- découpage du coagulum (3) et obtention d'un mélange fromager,
- fonctionnalisation (5) du mélange fromager par au moins une opération d'émulsification et obtention d'un mélange fromager fonctionnalisé,
- séchage (6) du mélange fromager fonctionnalisé et obtention d'une poudre fromagère (7).

2. Procédé selon la revendication 1, **caractérisé en ce que** :
- la teneur en matière grasse du mélange laitier (1) est ajustée par ajout d'une quantité contrôlée d'un ou de plusieurs composants laitiers constitués notamment de matière grasse, et
- la teneur en matière protéique du mélange laitier (1) est ajustée par ajout d'une quantité contrôlée d'un ou de plusieurs composants laitiers constitués notamment de matière protéique.

3. Procédé selon l'une quelconque des revendications 1 et 2, **caractérisé en ce que** :
- la teneur en extrait sec du mélange laitier (1) est ajustée par ajout d'une quantité contrôlée d'un ou de plusieurs composants laitiers sous forme séchée dans le mélange laitier (1), en tenant compte de la teneur en extrait sec des autres composants laitiers du mélange laitier (1) sous forme fluide.

4. Procédé selon l'une quelconque des revendications précédentes, **caractérisé en ce que** :
- la teneur en matière grasse du mélange laitier (1) est ajustée par ajout d'une quantité contrôlée de lait entier et/ou de crème, et
- la teneur en matière protéique du mélange laitier (1) est ajustée par ajout d'une quantité contrôlée de lait entier et/ou de lait écrémé et/ou de concentré de protéine sérique obtenue par ultrafiltration de sérum et/ou de rétentat de microfiltration ou d'ultrafiltration de lait écrémé et/ou de poudre de lait écrémé et/ou de poudre de rétentat de microfiltration ou d'ultrafiltration de lait écrémé et/ou de crème.

5. Procédé selon l'une quelconque des revendications précédentes, **caractérisé en ce que** :
- la teneur en extrait sec du mélange laitier (1) est ajustée par ajout d'une quantité contrôlée de poudre de lait écrémé et/ou de poudre de rétentat de microfiltration ou d'ultrafiltration de lait écrémé, en tenant compte des teneurs relatives en concentré de protéine sérique obtenue par ultrafiltration de sérum et/ou en rétentat de microfiltration ou d'ultrafiltration de lait écrémé et/ou en crème dans le mélange laitier (1).

6. Procédé selon l'une quelconque des revendications précédentes, **caractérisé en ce qu'**une ou plusieurs étapes successives de soutirage (4) sont réalisées après l'étape de découpage du coagulum (3).

7. Procédé selon l'une quelconque des revendications précédentes, **caractérisé en ce que** la teneur en lactose relativement à la teneur en extrait sec du mélange laitier (1) est ajustée par ajout d'une quantité contrôlée de chacun des composants laitiers constituant le mélange laitier (1) et selon la teneur correspondante en lactose visée dans le produit fromager après reconstitution.

8. Procédé selon l'une quelconque des revendications 6 et 7, **caractérisé en ce que** la teneur en lactose relativement à la teneur en extrait sec du mélange laitier (1), est ajustée :
- par ajout d'une quantité contrôlée de chacun des composants laitiers constituant le mélange laitier (1), et
- par le contrôle du volume de lactosérum soutiré lors de ou des étapes de soutirages,
selon la teneur correspondante en lactose visée dans le produit fromager après reconstitution.

9. Procédé selon l'une quelconque des revendications précédentes, **caractérisé en ce que** l'étape de fonctionnalisation comporte une opération d'émulsification par voie chimique à une température comprise entre 45 et 65°C.

10. Procédé selon la revendication 10, **caractérisé en ce que** l'émulsification par voie chimique est réalisée par ajout d'au moins un sel émulsifiant à base de citrates, de phosphates de types diphosphates, triphosphates, polyphosphates et/ou orthophosphates et/ou de lactates de sodium et/ou de potassium.

11. Procédé selon l'une quelconque des revendications 9 et 10, **caractérisé en ce qu'il** comporte une opération de cisaillement subséquente à l'opération d'émulsification par voie chimique.

12. Procédé selon l'une quelconque des revendications 1 à 8, **caractérisé en ce que** l'étape de fonctionnalisation comporte une opération d'émulsification par voie mécanique réduisant la taille moyenne des particules à moins de 500 micromètres.

13. Procédé selon l'une quelconque des revendications précédentes, **caractérisé en ce que** l'étape d'acidification est réalisée soit lors de l'étape de préparation du mélange laitier (1) pour l'obtention d'un mélange laitier dont le pH est compris entre 5 et 6, soit lors de l'étape de fonctionnalisation.

14. Procédé selon l'une quelconque des revendications précédentes, **caractérisé en ce que** l'étape de séchage (8) est réalisée par séchage par atomisation.

15. Procédé selon l'une quelconque des revendications précédentes, **caractérisé en ce que** le mélange fromager fonctionnalisé comporte une teneur en matière grasse relative à la teneur en extrait sec comprise entre 40 et 50%, une teneur en matière protéique relative à la teneur en extrait sec comprise entre 28 et 40%, et éventuellement une teneur en lactose relative à la teneur en extrait sec comprise entre 10 et 20%.

16. Procédé selon l'une quelconque des revendications 1 à 14, **caractérisé en ce que** le mélange fromager fonctionnalisé comporte une teneur en matière grasse relative à la teneur en extrait sec comprise entre 48 et 55%, une teneur en matière protéique relative à la teneur en extrait sec comprise entre 18 et 25%, et éventuellement une teneur en lactose relative à la teneur en extrait sec comprise entre 13 et 25%.

17. Procédé selon l'une quelconque des revendications 1 à 14, **caractérisé en ce que** le mélange fromager fonctionnalisé comporte une teneur en matière grasse relative à la teneur en extrait sec comprise entre 50 et 55%, une teneur en matière protéique relative à la teneur en extrait sec comprise entre 28 et 35%, et éventuellement une teneur en lactose relative à la teneur en extrait sec comprise entre 5 et 10%.

18. Procédé selon l'une quelconque des revendications 1 à 14, **caractérisé en ce que** le mélange fromager fonctionnalisé comporte une teneur en matière grasse relative à la teneur en extrait sec comprise entre 65 et 75%, une teneur en matière protéique relative à la teneur en extrait sec comprise entre 15 et 20%, et éventuellement une teneur en lactose relative à la teneur en extrait sec comprise entre 3 et 10%.

19. Procédé de préparation d'un produit fromager, **caractérisé en ce qu'il** comprend au moins une étape de reconstitution consistant en au moins une opération de mélange (8) d'un composant liquide avec la poudre fromagère (7) obtenue par le procédé selon l'une quelconque des revendications 1 à 18.

20. Procédé selon la revendication 19, **caractérisé en ce que** la proportion de composant liquide est comprise entre 40 et 65%, et **en ce que** la proportion de poudre fromagère (7) est comprise entre 35 et 60%.

21. Procédé selon l'une quelconque des revendications 19 et 20, **caractérisé en ce que** le composant liquide est de l'eau.

22. Procédé selon la revendication 19, **caractérisé en ce que** l'étape de reconstitution comporte en outre une étape d'ajout de colorant et/ou d'arômes et/ou de gélifiant et/ou de fromages.

23. Procédé selon l'une quelconque des revendications 19 à 22, **caractérisé en ce qu'il** comprend une étape de cuisson-stérilisation (11) subséquente à l'étape de mélange (10) du composant liquide avec la poudre de fromage fondu (9).
